# EUROPEAN PATENT SPECIFICATION

(11) **EP 0 677 225 B1**
(45) Date of publication and mention of the grant of the patent: **22.03.2000**
(21) Application number: 94902787.4
(22) Date of filing: 28.12.1993
(51) Int. Cl.: H04L 12/10, H02J 3/38

(54) **SYSTEM FOR PROVIDING VOLTAGE IN A VOLTAGE LINE COMMON TO A PLURALITY OF ELECTRICAL UNITS**
ANORDNUNG ZUR SPANNUNGSLIEFERUNG AN EINER FUER MEHRERE ELEKTRISCHE EINHEITEN GEMEINSAMEN SPANNUNGSLIEFERUNG
SYSTEME DE PRODUCTION DE TENSION DANS UNE LIGNE DE TENSION COMMUNE A UNE PLURALITE D'UNITES ELECTRIQUES

(30) Priority: 29.12.1992 FI 925920
(43) Date of publication of application: 18.10.1995
(73) Proprietor: Nokia Networks Oy, 02150 Espoo (FI)
(72) Inventor: POUTANEN, Antti, FIN-00330 Helsinki (FI); RISTIMÄKI, Hemmo, FIN-02940 Espoo (FI); ANTTALAINEN, Tarmo, FIN-02660 Espoo (FI)
(74) Representative: Örtenblad, Bertil Tore
(86) International application number: FI9300556
(87) International publication number: WO9415424

(56) References cited:
- EP-A- 0 551 114
- US-A- 4 204 249
- US-A- 4 698 517
- US-A- 4 768 147
- US-A- 4 788 449

## Description

The present invention relates to a system for providing the voltage in a voltage line common to a plurality of electrical units, in which system each electrical unit comprises a power supply unit for supplying power to the electrical circuits of said electrical unit (cf. also document US-A-4 768 147).

The telecommunications apparatus, such as telecommunication apparatus connected to telecommunications networks, frequently comprise a plurality of so-called plug-in units connected to the telecommunication bus in which the data passes. Hereby, the data is so transferred that the data to be transferred is supplied through a plug-in unit into the bus where another plug-in unit picks said data, to be transferred to a desired address. Thus, the plug-in units both supply data to the bus and pick data therefrom, as well as include logic for processing data. In current digital data transfer networks, time-division technique has been more and more adopted, in which time-divided synchronnous signals are used. From the time-divided synchronous bus signals, the plug-in units pick given time intervals and respectively, supply data of certain time intervals into the bus. In apparatus with large data transfer capacity the electrical plug-in units are ensured as regards their reliability, whereby a plug-in unit provided with ensuring capacity must be in connected mode with the bus in order to be switchable on when another plug-in unit becomes damaged. When connecting another plug-in unit to the bus or when removing a plug-in unit, the internal signals within the system become disturbed unless special circuit designs are used. In apparatus processing time-divided signals, also the signals of other time intervals are disturbed when plug-in units processing given time intervals are added or removed unless specific circuit designs are used.

The plug-in units can in practice be circuit cards comprising various logic, said cards being connected to the bus with connectors, e.g. so that a plug-in unit is easy to attach and detach. In order to avoid disturbances at the moment of attaching and detaching, so-called lengthened pins are used in the plug-in unit for the power supply of the plug-in unit (i.e. operating voltage), and/or respectively, shorter pins for signal conductors in order to have the operating voltages connected to the plug-in unit prior to the connection of the signal lines to the bus, respectively, for the signal conductors to be disconnected from the bus prior to the removal of the operating voltages of the plug-in unit. The use of said design is, however, difficult because the plug-in units usually comprise a great number of conductors, and it is necessary to make sure that for each conductor, a pin of correct length with connectors has been provided. Another alternative is to use separate, so-called interface circuits, which are commercially available. Said interface circuits are positioned between the logic of the plug-in unit and the bus, and they comprise e.g. buffers, such as three state buffers, which are brought into a high-impedance state until the plug-in unit has at the signal conductors thereof been connected to the bus, and it is brought off from the high-impedance state when the plug-in unit is taken into use. A drawback in said separate interface circuits is that they include circuits for a number of different applications, whereby, with a view to a given application, they contain unnecessary circuits, thus taking too much space. The plug-in units are moreover usually provided with a greater number of signal conductors than there are buffers in commercially available interface circuits, whereby several interface circuits are required, these taking much space in the circuit card including a plug-in unit, this card being made as small in size as possible so that the size of the data transfer means can be kept small. Also, the interface circuits have to be brought externally at a right moment to proper states thereof in order to provide disturbance-free connection. Hence, disturbance-free connection may be uncertain.

In a co-pending patent application (WO-A-94/15298) of the same applicant "Disturbuance-free connection to a time-divided bus" an interface circuit integrated with the plug-in unit in order to provide disturbance-free connection to a time-divided bus for elimination of the drawbacks presented above. The interface circuit disclosed in said patent application comprises a three state buffer connected with a signal conductor to each bus and a logic controlling each three state buffer, said logic every time setting in a predetermined state according to what has been preprogrammed in the memory concerning the control logic. The memory and hence, the control logic can also be brought separately to desired logical states. In addition, means have been provided in the interface circuit for disconnecting the clock signal in the logical circuit, for instance a controllable logic, this being also controlled with the logic controlling the three state buffer. The auxiliary voltage required by the interface circuits can be minimized by disconnecting the clock signals of the logic circuits of the plug-in unit automatically while being connected to the bus. In this manner, disturbance-free connection is ensured by means of low power consumption, and thanks to the automatic control, the disturbance-free connection is well controlled and the disturbance of the signal can surely be avoided. When a plug-in unit is connected to a bus, it is provided with a low-level auxiliary voltage from an external supply line with which to operate. For such auxiliary voltage line, a lengthened pin can be provided on the circuit card so that the interface circuit is given the auxiliary voltage before connecting the plug-in unit to the bus, whereby the interface circuit is in a controlled state at the moment of connection.

Also when a separate commercially available interface circuit is used, an auxiliary voltage has to be arranged for it to operate therewith when there is no operating voltage yet available in the plug-in unit.

When the power supply of the plug-in units has been concentrated, it is possible, as mentioned above, to use longer pins for the operating voltage and shorter pins for the signal conductors so that the operating voltages can be provided for the plug-in unit before being connected to the bus. Now, all plug-in units receive the operating voltage at one and the same power supply unit. In a distributed power supply system where each plug-in unit is provided with an individual power source, and in which an interface circuit is provided for disturbance-free connection to the bus, the on-time of the power source of the plug-in unit is so long (of the order 0.5 seconds) that even the lengthened pins do not provide a sufficient solution when operating voltages have to be provided for the interface circuit of the plug-in unit before said plug-in unit is connected to the bus. Connection to a bus can be implemented without any disturbances by using, as mentioned above, separate bus interface circuits or those integrated with the plug-in unit, to which an external auxiliary voltage is supplied from a specific bus serving as the voltage supply line. Hereby, a power supply unit has been provided for the voltage line, supplying to said supply line a voltage of the magnitude of the auxiliary voltage, wherefrom the interface circuits of the plug-in units may acquire the requisite auxiliary voltage. Between the supply line and the interface circuit, a diode has also been provided so that the anode thereof is connected to the supply line and the cathode, to the interface circuit. The purpose of the diode is to inhibit the interface circuit from disturbing the auxiliary voltage level of the supply line. A drawback related to the design is that when the power supply unit supplying the auxiliary voltage to the supply line becomes damaged, the auxiliary line breaks down. The diode is moreover not a very long-lasting component when protecting the supply line, and voltage losses tend to occur in the diode; hence, the voltage acquired by the interface circuits is not precisely the same as the voltage in the supply line.

The objective of the present invention is to provide a circuit design for arranging an auxiliary voltage for the interface circuits of the plug-in units, wherewith the above drawbacks are avoidable and an accurate and reliable auxiliary voltage can be provided in the supply line. An accurate auxiliary voltage means that the voltage level remains precisely and continuously at a desired value. For implementing said aim, the plug-in units have been so arranged that each plug-in unit is provided with an individual power supply unit supplying the operating voltages to the electrical circuits of the plug-in unit and the interface circuits, and in addition, it generates auxiliary voltage, supplying said voltage to the auxiliary voltage line used in common by the plug-in units when the plug-in unit is in operation. Between the power supply unit and the interface circuit, a switch has been provided, this being switched off when the power supply unit is supplying the auxiliary voltage line, and on, when the plug-in unit is being connected to the bus, so that the interface circuit of the plug-in unit is provided with the auxiliary voltage it needs from the auxiliary voltage line. Between the plug-in unit and the auxiliary voltage line, a protection resistor has been arranged to limit the magnitude of the current from the auxiliary voltage line to the interface circuit, thus protecting the plug-in unit from being damaged, e.g. when the auxiliary voltage line is shortcircuited, respectively, protecting the auxiliary voltage line by preventing the power supply unit from supplying too high voltage to the auxiliary voltage line, e.g. when the power supply unit becomes damaged. In addition, for the protection resistor, a PTC resistor can be used, whereby if the power supply unit is damaged and starts to supply too high voltage to the line, the PTC resistor becomes heated, so that the resistance thereof increases, this, in turn, reducing the current passing therethrough, and as the situation becomes normal, the value of the PTC resistor reduces into normal. For such resistor, also e.g. a fuse resistor can be used.

The system described in the introduction is, as taught by the invention, characterized in that the power supply unit supplies power also to said common voltage line when the power supply unit is in operation and, when the power supply unit is not in operation, at least some of the electrical circuits of the electrical unit acquire voltage from said common voltage line.

Since the supply of the auxiliary voltage to the auxiliary voltage line has been distributed, i.e. all power supply units of the plug-in units in use supply the auxiliary voltage line, the supply is therefore well guaranteed. The current from the auxiliary voltage or the current to the auxiliary voltage line is usually low-level compared with the power source of the power supply unit. Hereby, the power supply unit of even one plug-in unit alone is able to supply the auxiliary voltage, and in a normal situation, all of the power supply units of the plug-in units in use supply to the auxiliary voltage line. The more units there are supplying to the auxiliary supply line, the more reliable the system is and the more accurate voltage can be provided since the distribution of the voltage supplied to the auxiliary voltage line is the smaller the more units there are supplying the line.

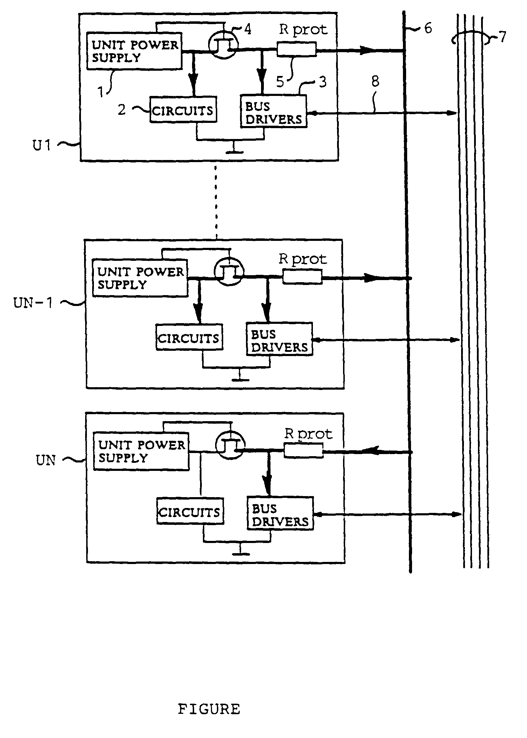

The invention is described below in detail referring to the accompanying figure, presenting the circuit design according to the invention.

The figure presents a plurality of plug-in units U1,..., UN-1, UN connected to a data bus 7 where the data is transferred between the plug-in units, said plug-in units supplying data to the data bus 7 and picking data therefrom. The plug-in unit U1...UN is at the signal conductors 8 thereof connected to the data bus 7 through an interface circuit 3, wherefrom the data is transferred to the electrical circuits of the plug-in unit, respectively, the electrical circuits 2 supply the data they have processed to the bus 7 through the interface circuits 3 and the signal conductors 8.

When a plug-in unit U1...UN is connected to bus 7, the interface circuit 3 thereof is provided with auxiliary voltage from an auxiliary voltage line 6, whereby the plug-in unit U1...UN can be connected to bus 7 disturbance-free with the aid of an interface circuit 3. Between the auxiliary voltage line 6 and the interface circuit 3, a protection resistor 5 has been arranged to protect the plug-in unit U1...UN from being damaged if for some reason e.g. the auxiliary voltage line 6 becomes shortcircuited. The protection resistor 5 also limits the magnitude of the current taken by the plug-in unit U1...UN from the auxiliary voltage line 6 so that the plug-in unit U1...UN, e.g. when shortcircuiting or when the power supply unit 1 thereof will not start, would not take all current from the auxiliary voltage line 6, which would lower the voltage level of the auxiliary voltage line, and which would cause damage situations in other plug-in units U1...UN. Between the power supply unit 1 and the auxiliary voltage line 6 a switch 4 has been provided after the resistor 5, preferably a transistor 4 of a type known in the art, or some other semiconductor switch, controlled by the power supply unit 1, and which is not conducting when the interface circuit 3 receives current from the auxiliary voltage line 6, while the power supply unit 1 has been switched off. This is the manner in which it has been ensured that the power acquired from the auxiliary voltage line 6 enters the interface circuit 3 only.

When a plug-in unit U1...UN is taken into use, the power supply unit 1 thereof is started. After the power supply unit 1 has been started to supply sufficient operating voltage, the interface circuit 3 no longer needs external auxiliary voltage. The switch 4 inserted between the power supply unit 1 and the protective resistor 5 is now switched off controlled by the power supply unit 1, and the power supply unit 1 starts to supply voltage to the auxiliary voltage line 6, wherefrom the interface circuits 3 of the other plug-in units U1...UN potentially requiring auxiliary voltage receive the auxiliary voltage. Now, the current supplied into the auxiliary voltage line 6 is limited by the protection resistor 5 not to falter the auxiliary voltage level of said line. For the protection scope 5 it is advantageous to use e.g. a PTC resistor, whereby when the current supplied to the line 6 increases (or generally, when the current passing through the PTC resistor grows) in a damage situation too great, the PTC resistor 5 becomes heated, thereby increasing the resistance value thereof, this in turn reducing the current, and as the situation becomes normal, the value of the PTC resistor 5 decreases to normal. For resistor 5, a fuse resistor 5 may also be used to break off the current supply to the auxiliary voltage line 6 if the current passing therethrough, like current supplied by the power supply unit 1, becomes too great. The protection resistor 5 thus protects both the plug-in unit U1...UN and the auxiliary voltage line 6 by means of limiting the current, passing therethrough in either direction, to maintain below a given value. Thus, the connection between the plug-in unit U1...UN and the auxiliary voltage line 6 is bidirectional. Consequently, the plug-in units U1...UN in use supply voltage to the auxiliary voltage line 6, and from the auxiliary voltage line 6, the interface circuits 3 of the plug-in units U1...UN connected to the bus 7 but not yet in use take voltage. The voltage in the auxiliary voltage line 6 passes smoothly from all power supply units 1 of the plug-in units U1...UN supplying the auxiliary voltage line 6 according to Ohm's law, with the result that no individual power supply unit 1 will be loaded more in comparison with the rest of the power supply units 1. When the auxiliary voltage line 6 is used for running a low-level current load from one plug-in unit U1, the protection resistor causes voltage loss U, the magnitude thereof being the resistance R of the load resistance 5 multiplied by the magnitude I of the current passing through the load resistor 5. The protection resistor 5 thus acts in the manner of the inner resistance of the voltage source. If the auxiliary voltage line 6 is run from a number of plug-in units U1...UN, i.e. from N number of plug-in units, the voltage loss will be reduced to 1/N of said value. If the rated voltages supplied by various plug-in units U1...UN (i.e. of the power supply units 1 thereof) vary, the lowest idle current is left within the circuit produced by the auxiliary voltage line 6 and the plug-in units U1...UN to circulate between the plug-in units U1...UN even if the line is not loaded. The direction and magnitude of said current is dependent on the differencial voltages between the power supply units 1 of the units U1...UN.

The present invention enables reliable and accurate auxiliary voltage supply in a system comprising a number of electrical units, in which the electrical units, or the electrical units associated therewith receive the auxiliary voltage they temporarily need from a common line. An example of a system like this is a telecommunication system, such as a data transfer apparatus, in which data is transferred in a data bus whereto several so-called plug-in units have been connected, wherebetween data is transferred. The invention guarantees an undisturbed connection of the plug-in unit to the bus because with the design of the invention the acquisition of the auxiliary voltage required by the interface circuit can be guaranteed. Also other applications may exist; thus, the invention is not confined to the examples described in the present context, and it may be modified within the scope of the accompanying claims.

## Claims

1. A system for providing voltage in a common line (6) for a plurality of electrical units (U1,...,UN-1),UN), in which each electrical unit (U1...UN) comprises a power supply unit (1) for supplying power to the electrical circuits (2,3) of the electrical unit (U1...UN), characterized in that the power supply unit (1) provides power also to said common voltage line (6) when the power supply unit (1) is in operation, and when the power supply unit is not in operation, at least some (3) of the electrical circuits (2,3) of the electrical unit (U1...UN) take the voltage from said common voltage line (6).

2. System according to claim 1, characterized in that between the power supply unit (1) and the voltage line (6) a switch (4) is provided, this being, when the power supply unit (1) is in operation, in such position that the power supply unit (1) supplies power to said voltage line (6), and in another position when the power supply unit is not in operation, whereby at least some (3) of the electrical circuits (2,3) of the electrical unit (U1...UN) take voltage from said common voltage line (6).

3. System according to claim 2, characterized in that the power supply unit (1) controls the switch (4).

4. System according to claim 3, characterized in that a transistor (4) is used as the switch (4).

5. System according to claim 2, characterized in that a resistor (5) is provided between the switch (4) and the voltage line (6).

6. System according to claim 5, characterized in that the resistor (5) is a PTC resistor (5).

7. System according to claim 5, characterized in that the resistor (5) is a fuse resistor (5).

8. System according to any one of the preceding claims, characterized in that the electrical unit (U1...UN) comprises an interface circuit (3) for connecting the electrical unit (U1...UN) without any disturbances to a data transfer bus (7) common to the electrical units (U1...UN), and to the interface circuit (3) the operating voltage is connected from said common voltage line (6) while the power supply unit (1) is not in operation.

9. System according to claim 8, characterized in that the operating voltage is connected to the interface circuit (3) from the power supply unit (1) while it is in operation.

10. A telecommunication system characterized in that it comprises a system according to any one of the preceding claims.

## Patentansprüche

1. System zum Bereitstellen einer Spannung an einer gemeinsamen Leitung (6) für eine Vielzahl elektrischer Einheiten (U1, ..., UN-1, UN), bei dem jede elektrische Einheit (U1, ..., UN) eine Energieversorgungseinheit (1) zur Zufuhr von Energie zu den elektrischen Schaltkreisen (2, 3) der elektrischen Einheit (U1, ..., UN) aufweist, **dadurch gekennzeichnet, daß** die Energieversorgungseinheit (1) ebenso der gemeinsamen Spannungsleitung (6) Energie bereitstellt, wenn die Energieversorgungseinheit (1) in Betrieb ist, und daß zumindest einige (3) der elektrischen Schaltkreise (2, 3) der elektrischen Einheit (U1, ..., UN) die Spannung von der gemeinsamen Spannungsleitung (6) beziehen, wenn die Energieversorgungseinheit nicht in Betrieb ist.

2. System nach Anspruch 1, **dadurch gekennzeichnet, daß** zwischen der Energieversorgungseinheit (1) und der Spannungsleitung (6) ein Schalter (4) bereitgestellt ist, welcher, wenn die Energieversorgungseinheit (1) in Betrieb ist, in einer derartigen Stellung ist, daß die Energieversorgungseinheit (1) der Spannungsleitung (6) Energie zuführt, und wenn die Energieversorgungseinheit nicht in Betrieb ist, in einer anderen Stellung ist, wodurch zumindest einige (3) der elektrischen Schaltkreise (2, 3) der elektrischen Einheit (U1, ..., UN) Spannung von der gemeinsamen Spannungsleitung (6) beziehen.

3. System nach Anspruch 2, **dadurch gekennzeichnet, daß** die Energieversorgungsquelle (1) den Schalter (4) steuert.

4. System nach Anspruch 3, **dadurch gekennzeichnet, daß** ein Transistor (4) als der Schalter (4) verwendet wird.

5. System nach Anspruch 2, **dadurch gekennzeichnet, daß** ein Widerstand (5) zwischen dem Schalter (4) und der Spannungsleitung (6) bereitgestellt ist.

6. System nach Anspruch 5, **dadurch gekennzeichnet, daß** der Widerstand (5) ein PTC Widerstand (5) ist.

7. System nach Anspruch 5, **dadurch gekennzeichnet, daß** der Widerstand (5) ein Schmelzsicherungswiderstand (5) ist.

8. System nach einem der vorhergehenden Ansprüche, **dadurch gekennzeichnet, daß** die elektrische Einheit (U1, ..., UN) einen Schnittstellenschaltkreis (3) zum Anschließen der elektrischen Einheit (U1, ..., UN) ohne jegliche Störungen an einen den elektrischen Einheiten (U1, ..., UN) gemeinsamen Datenübertragungsbus (7) aufweist, und daß die Betriebsspannung dem Schnittstellenschaltkreis (3) von der gemeinsamen Spannungsleitung (6) zugeschaltet wird, während die Energieversorgungseinheit (1) nicht in Betrieb ist.

9. System nach Anspruch 8, **dadurch gekennzeichnet, daß** die Betriebsspannung dem Schnittstellenschaltkreis (3) von der Energieversorgungseinheit (1) zugeschaltet wird, während diese in Betrieb ist.

10. Telekommunikationssystem, **dadurch gekennzeichnet, daß** es ein System gemäß einem der vorhergehenden Ansprüche aufweist.

## Revendications

1. Système pour alimenter en tension sur une ligne commune (6) à une pluralité d'unités électriques (U1, ..., UN-1, UN), dans lequel chaque unité électrique (U1 ... UN) comprend une unité d'alimentation (1) pour alimenter les circuits électriques (2, 3) de l'unité électrique (U1 ... UN), caractérisé en ce que l'unité d'alimentation (1) alimente également ladite ligne de tension commune (6) lorsque l'unité d'alimentation (1) est en fonctionnement, et lorsque l'unité d'alimentation n'est pas en fonctionnement, au moins certains (3) des circuits électriques (2, 3) de l'unité électrique (U1 ... UN) prennent la tension à partir de ladite ligne de tension commune (6).

2. Système selon la revendication 1, caractérisé en ce que, entre l'unité d'alimentation (1) et la ligne de tension (6), un commutateur (4) est prévu, lequel se trouve, lorsque l'unité d'alimentation (1) est en fonctionnement, dans une position telle que l'unité d'alimentation (1) alimente ladite ligne de tension (6), et dans une autre position lorsque l'unité d'alimentation n'est pas en fonctionnement, de telle manière qu'au moins certains (3) des circuits électriques (2, 3) de l'unité électrique (U1 ... UN) prennent la tension à partir de ladite ligne de tension commune (6).

3. Système selon la revendication 2, caractérisé en ce que l'unité d'alimentation (1) commande le commutateur (4).

4. Système selon la revendication 3, caractérisé en ce qu'un transistor (4) est utilisé comme commutateur (4).

5. Système selon la revendication 2, caractérisé en ce qu'une résistance (5) est prévue entre le commutateur (4) et la ligne de tension (6).

6. Système selon la revendication 5, caractérisé en ce que la résistance (5) est une résistance à coefficient de température positif (5).

7. Système selon la revendication 5, caractérisé en ce que la résistance (5) est une résistance fusible (5).

8. Système selon l'une quelconque des revendications précédentes, caractérisé en ce que l'unité électrique (U1 ... UN) comprend un circuit d'interface (3) pour connecter l'unité électrique (U1 ... UN) sans occasionner aucune perturbation à un bus de transfert de données (7) commun aux unités électriques (U1 ... UN) et, au circuit d'interface (3), la tension de fonctionnement est connectée à partir de ladite ligne de tension commune (6) pendant que L'unité d'alimentation (1) n'est pas en fonctionnement.

9. Système selon la revendication 8, caractérisé en ce que la tension de fonctionnement est connectée au circuit d'interface (3) à partir de l'unité d'alimentation (1) pendant qu'elle est en fonctionnement.

10. Système de télécommunication caractérisé en ce qu'il comprend un système selon l'une quelconque des revendications précédentes.
